(19) Europäisches Patentamt
European Patent Office
Office européen des brevets

(11) Publication number: 0 074 585 B1

(12) # EUROPEAN PATENT SPECIFICATION

(45) Date of publication of patent specification: 05.06.85

(51) Int. Cl.[4]: C 09 K 11/73, H 01 J 29/20, H 01 J 61/44

(21) Application number: 82108152.8

(22) Date of filing: 03.09.82

(54) **Blue-green emitting halophosphate phosphor, and fluorescent lamp employing the same.**

(30) Priority: 03.09.81 JP 137837/81
03.09.81 JP 137838/81

(43) Date of publication of application:
23.03.83 Bulletin 83/12

(45) Publication of the grant of the patent:
05.06.85 Bulletin 85/23

(84) Designated Contracting States:
DE FR GB IT NL

(56) References cited:
GB-A-1 264 422
US-A-3 396 118
US-A-3 630 947
US-A-4 038 204

(73) Proprietor: Kabushiki Kaisha Toshiba
72, Horikawa-cho Saiwai-ku
Kawasaki-shi Kanagawa-ken 210 (JP)

(72) Inventor: Taya, Akira
1-776, Kosugijinyacho Nakahara-ku
Kawasaki-shi Kanagawa-ken (JP)
Inventor: Narita, Kazuo
2-24-10-1-501, Shimomaruko
Ota-ku Tokyo (JP)
Inventor: Akiyama, Jun-etsu
102, Bunko-Mansion 54, Yatsumachi Kanazawa-ku
Yokohama-shi Kanagawa-ken (JP)
Inventor: Asada, Masao
1172-2 Higashihongocho Midori-ku
Yokohama-shi Kanagawa-ken (JP)
Inventor: Nira, Hisami
336, Noboritoshinmachi Tama-ku
Kawasaki-shi Kanagawa-ken (JP)
Inventor: Kimura, Yoshio
Room No. 103, Sasayama-Danchi 103
951, Kamisugetacho Hodogaya-ku
Yokohama-shi Kanagawa-ken (JP)

(74) Representative: Hansen, Bernd, Dr.rer.nat. et al
Hoffmann, Eitle & Partner Patentanwälte
Arabellastrasse 4
D-8000 München 81 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 074 585 B1

Courier Press, Leamington Spa, England.

**Description**

This invention relates to a blue-green emitting halophosphate phosphor and a fluorescent lamp employing said phosphor. More particularly, it relates to a blue-green emitting halophosphate phosphor activated with divalent europium, and a high color rendering fluorescent lamp employing said phosphor and having radiation color temperature of 4200 to 5600 K (Kelvin) and average color rendering index (Ra) of not less than 95.

Heretofore, it is known that halophosphate phosphors activated with divalent europium emit or generate blue or blue-green fluorescence, are disclosed in Japanese Patent Publication No. 40604/1971 and U.S. Patent No. 4,038,204. These phosphors, however, do not possess a satisfactory efficiency and are known to have such disadvantages as large deterioration in baking process in producing fluorescent lamps, or a poor lumen maintenance factor of produced lamps, when they are applied to fluorescent lamps.

Calcium halophosphate phosphors activated with antimony and manganese are widely used for illumination fluorescent lamps for the general use. However, due to its poor color rendering, the use thereof is inadequate at places such as art museums and color printing factories where a high color rendering is required.

There are known heretofore the following measures in order to solve the problem and achieve a high color rendering: In one example, the emitting layer comprises a mixture of several kinds of phosphors so as to approximate the spectral energy distribution of the reference illuminant. In another example, mercury line at the visible short wavelength region hindering good color rendering is suppressed.

Of the above, for the so-called EDL Type lamps that is required to have especially a high color rendering, suppression of mercury line is effective for the improvement in color rendering. For this purpose, there are known a lamp having a double-coated phosphor layer or one in which a separate pigment layer is provided.

The former concerns a phosphor layer in which emission energy at 405 and 436 nm mercury line in the visible short wavelength region that hinders improvement in the color rendering is absorbed and, moreover, the absorbed energy itself is converted to the red color radiation, for example a phosphor combination comprising a first layer of magnesium fluorogermanate activated with manganese (3.5 MgO, 0.5 $MgF_2$, GeO2:Mn) and a second layer of another phosphor coated thereon (Japanese Patent Publication No. 9868/1966).

The latter is to provide a yellow pigment layer between a glass tube and a phosphor, whereby about 60% of 436 nm mercury line may be suppressed as compared with one in which no pigment layer is provided (Japanese Patent Publication No. 15896/1973). However, the known methods described above involve such disadvantages as production inefficiency due to complication of lamp manufacturing steps, variation of luminous color and color rendering caused by change in the thickness of pigment layer, or lowering of phosphor efficiency caused by absorption of emission energy.

Recently, improvements in the above-mentioned problems have been proposed (Japanese Laid-open Patent Applications Nos. 102073/1979 and 115489/1980). They fail, however, to fully improve the problems.

In the former proposition (Japanese Laid-open Patent Application No. 102073/1979), at least four different species of phosphors including calcium halophosphate and zinc silicate phosphor must be used because the peak wavelength of the blue-green phosphor employed is too short to bring chromaticity coordinate upon blackbody locus. This inevitably gives rise to such disadvantages as considerable variation of luminescence color and color redering, and lowering of efficiency.

The latter proposition brings about such advantages as high efficiency and superior color rendering. However, it also brings about difficulty in color control such as luminescence color and color rendering because three different species of phosphors, including blue and red color phosphors emitting within a narrow wavelength region, must be used admixed.

In view of the above-mentioned disadvantages, it is an object of this invention to provide blue-green emitting phosphors having superior characteristics. Another object of this invention is to provide more efficient fluorescent lamps employing such phosphors, which may achieve a high color rendering by mixing only two kinds of phosphors without a layer of double-coated phosphor or without a pigment layer.

The inventors have paid attention to the importance of the blue-green phosphors in obtaining a high color rendering, and studied intensively with various experiments to attain the above-mentioned objects. As the result, they have found out that a Ba—Ca—Mg system halophosphate phosphor activated with divalent europium has superior characteristics as compared with known halophosphate phosphors activated with divalent europium, and that a fluorescent lamp employing said phosphor and characterized by having the construction as described herein later shows remarkably a higher color rendering characteristics and superior emission efficiency as compared with known fluorescent lamps provided with a layer of double-coated phosphor or a pigment layer and, at the same time, retards lowering of luminous flux during operation.

According to this invention, there are provided a blue-green emitting halophosphate phosphor activated with the divalent europium which is characterized in that it is represented by the general formula [Herein after, this phosphor is often referred to as "a phosphor (i)"]:

$$M_{5-x}X(PO_4)_3:Eu^{2+}{}_{(x)}$$

(wherein, M consists of Ba, Ca and Mg; X is one or more of F, Cl or Br; and x is a positive value of less than 5);
and a fluorescent lamp which comprises a mixture of a phosphor (i) comprising an alkaline earth metal halophosphate activated with divalent europium, represented by the general formula as identified above, which has the emission peak at the wavelength region of 480 to 500 nm, and a phosphor (ii) having the emission peak at the wavelength region of 620 to 640 nm and the half-width of 120 to 160 nm, said mixture being coated inside of a glass tube.

A phosphor having superior characteristics can be obtained by selecting the value of Mg in M in the range of from 0.01 to 1.0 gram-atom in the above-mentioned general formula. In the above general formula, the subscript x denotes gram-atom value of the divalent europium and is so determined as to satisfy the inequality $0 < x < 5$, preferably $0.01 < x \leqq 0.2$. When the subscript x is not more than 0.01, luminescence intensity of the produced phosphor will be severely decreased. When it is more than 0.2, luminescence intensity of a produced phosphor will not remarkably be improved any more. It is more preferable that the value of x is determined to be $0.03 \leqq x \leqq 0.15$.

Furthermore, M should preferably consist of $3 \sim 4.5$ gram-atom of Ba, $0.5 \sim 2$ gram-atom of Ca and $0.01 \sim 1$ gram-atom of Mg. Where $Ba = 3 \sim 4.5$ and $Ca = 0.5 \sim 2$, a remarkable improvement in luminescence intensity is not achieved if the substituted amount of Mg is less than 0.01, as opposed to the case where only Ba and Ca are present. Presence of more than 1 gram-atom of Mg will rather lower luminescence intensity. It is more preferable that the amount of Mg is set to be $0.1 \sim 0.5$ gram-atom.

The phosphor (i) according to the invention may be prepared in the following manner: Namely, predetermined amount of various compounds such as oxides, phosphates, carbonates and ammonium salts that may form Ba, Ca, Mg, P, F, Cl, Br and Eu by firing are weighed. T he material mixture is thoroughly pulverized and mixed, for example, with a ball mill. The mixture is then placed in a alumina or quartz crucible and fired in air for $1 \sim 5$ hours at $800 \sim 1200$°C. The fired product is allowed to cool, pulverized and sieved, then again fired at $800 \sim 1200$°C in a slightly reducing atmosphere of, for example, a mixture of hydrogen and nitrogen. The twice fired product is allowed to cool, pulverized, sieved, washed, filtered, dried and again sieved to give the phosphor (i) of the invention.

In a fluorescent lamp according to a preferred embodiment of the invention, the characteristics superior to a prior art may be obtained within color temperature range of $4000 \sim 5000$ K by admixing at a suitable mixing ratio the above-mentioned phosphor (i) with, as the phosphor (ii), a strontium-magnesium orthophosphate phosphor activated with tin.

A characteristic feature of the above-mentioned phosphor (i), i.e. the alkaline earth metal halophosphate phosphor activated with divalent europium to be employed for the fluorescent lamp of this invention is that there may be obtained diverse phosphors having the emission peak within the wavelength region of $480 \sim 500$ nm by changing the mixing ratio of Ba, Ca and Mg of M in the above-mentioned general formula $M_{5-x}X(PO_4)_3:Eu^{2+}{}_{(x)}$.

An advantage derived from the capability of shifting the emission peak is that a fluorescent lamp having superior characteristics within any range from a low color temperature (4000 K) to a high color temperature (5600 K) may be obtained by the sole combination of the alkaline earth metal halophosphate phosphor (phosphor (i)) with the phosphor (ii) having the peak wavelength of $620 \sim 640$ nm and the half-width of $120 \sim 960$ nm, without any further phosphors. In addition, the phosphor (i) herein disclosed is of quite a high efficiency and stability.

A EDL Type fluorescent lamp using only two kinds of phosphors has been proposed (Japanese Patent Publication No. 27554/1981). However, no fluorescent lamp of sufficient characteristics may be obtained with this combination of phosphors, because $(Sr, Al)_3(PO_4)_2:Cu$ phosphor employed therein has rather poor efficiency and maintenance of luminous flux during operation.

This invention will be explained in more detail by the following Examples, with reference to the accompanying drawings.

In the drawings;

Figure 1 shows curves indicating the relationship of Mg fraction (expressed in gram-atom) with (1) relative luminescence intensity, (2) maintenance factor A, and (3) maintenance factor B of the phosphor according to the invention;

Figure 2 shows a curve indicating the relationship of Ca fraction (expressed in gram-atom) with the relative luminescence intensity of the phosphor;

Figure 3 shows a curve indicating the relationship of Eu fraction (expressed in gram-atom) with relative luminescence intensity of the phosphor; and

Figure 4 shows the spectral energy distributions of emission under 254 nm ultraviolet ray excitation of representative phosphors acording to the invention;

Figure 5 shows spectral energy distributions of emission of each phosphor employed in the fluorescent lamp of the invention;

Figure 6 shows chromaticity of emission color of the fluorescent lamp;

Figure 7 shows spectral energy distributions of emission of the fluorescent lamps indicated in Examples 4 to 6, in comparison with prior art having the double layer coating; and

Figure 8 shows the cross-sectional schematic view of the fluorescent lamp of the invention.

Example 1

In the phosphor represented by the formula $M_{5-x}X(PO_4)_3:Eu^{2+}{}_{(x)}$ shown in Table 1 infra, X was made to be Cl and x were fixed to be 0.05, whereas M was varied to give the phosphors (Nos. 1—10 in Table 1). For comparison, a conventional phosphor containing no Mg was similarly prepared (No. 21).

Each material mixture was pulverized, blended in a ball mill for 2 hours and then sieved. The mixture was placed in a quartz crucible and fired in air at 950°C for 3 hours. The fired product obtained in this manner was allowed to cool, pulverized and sieved, then fired again at 950°C for 1 hour in a mixed gas containing 2% hydrogen and 98% nitrogen.

The fired product was allowed to cool, pulverized, sieved, washed, filtered, dried and sieved again to give the phosphor specimen. Each specimen was confirmed by chemical analysis to have the stoichiometric composition.

The crystal structure of the specimen was confirmed to be a perfect chloroapatite structure by X-ray diffraction pattern analysis. Further, it turned out that the lattice constant has changed in accordance with the mixing ratio of Ba, Ca and Mg.

The specimens thus obtained were tested for (1) relative luminescence intensity, (2) maintenance factor A, and (3) maintenance factor B. The results are shown in Figure 1 in correspondence to gram-atom value of Mg admixed. The most preferable results are obtained when the amount of Mg is set to be 0.15 ~ 0.3 gram-atom.

The tests were performed in the following manner, respectively:

(1) Relative luminescence intensity:

The relative value of luminescence intensity of a specimen when excited by 254 nm ultraviolet radiation in comparison to luminescence intensity (100.0) of control (No. 11 in Table 1) excited in the same manner. The relative value has close correlation to the initial luminous flux when applied to a fluorescent lamps.

(2) Maintenance factor A:

The ratio of luminescence intensity before and after baking in air at 600°C for 10 minutes expressed by the following formula:

$$\frac{\text{luminescence intensity after baking}}{\text{luminescence intensity before baking}} \times 100(\%).$$

This value can be correlated to the deterioration of luminescence intensity in baking process when fluorescent lamps are produced.

(3) Maintenance factor B:

The ratio of luminescence intensity before and after irradiation of specimen for 4 hours by ultraviolet radiation (containing strong 185 nm line emission) from a quartz low pressure mercury lamp and indicated by the formula:

$$\frac{\text{luminescence intensity after irradiation of ultraviolet ray for 4 hours}}{\text{luminescence intensity without irradiation}} \times 100(\%)$$

This value can be correlated to lumen maintenance factor when applied to fluorescent lamps.

Example 2

In the phosphor represented by the formula $M_{5-x}X(PO_4)_3:Eu^{2+}{}_{(x)}$ shown in Table 1 infra, X was made to be Cl and x and Mg were fixed to 0.05 and 0.2 respectively, whereas mixing ratio of Ba and Ca in M was varied to give the phosphors (Nos. 11—14 in Table 1), according to the same procedures as in Example 1.

The specimen were similarly tested for luminescence intensity by 254 nm ultraviolet excitation.

In this case, the figures represent relative luminescence intensity, when that of specimen No. 21 in Table 1 is set for 100.0. The results are shown in Figure 2 in correspondence to gram-atom values of Ca admixed.

Example 3

In the phosphor represented by the formula $M_{5-x}X(PO_4)_3:Eu^{2+}{}_{(x)}$ shown in Table 1 infra, X was made to be Cl and Ca and Mg were fixed to 1.0 and 0.2, respectively, whereas Ba in M and $Eu_{(x)}$ were varied to give the phosphors Nos. 15—20 in Table 1, according to the same procedures as in Example 1. The specimens were similarly tested for luminescence intensity by 254 nm ultraviolet excitation.

In this case, the figures represent relative luminescence intensity, when that of specimen No. 21 in Table 1 (prior art) is set for 100.0. The results are shown in Figure 3 in correspondence to gram-atom values of Ca admixed.

Figure 4 shows spectral energy distribution of emission of the phosphors according to the invention (No. 12 and No. 13 in Table 1 according to Example 2 as the representatives) when excited by ultraviolet ray at 254 nm.

TABLE 1

| No. | M (Gram-atom) | | | × (Gram-atom) | × (Gram-atom) | (1) Relative luminescence intensity | (2) Maintenance factor A | (3) Maintenance factor B |
|---|---|---|---|---|---|---|---|---|
| | Ba | Ca | Mg | Cl | Eu | | | |
| 1 | 3.90 | 1.0 | 0.05 | 1.0 | 0.5 | 106.5 | 92.5 | 85.0 |
| 2 | 3.85 | ,, | 0.10 | ,, | ,, | 111.0 | 94.5 | 86.5 |
| 3 | 3.80 | ,, | 0.15 | ,, | ,, | 114.0 | 96.5 | 87.5 |
| 4 | 3.75 | ,, | 0.20 | ,, | ,, | 115.0 | 98.0 | 87.5 |
| 5 | 3.70 | ,, | 0.25 | ,, | ,, | 114.5 | 99.0 | 87.0 |
| 6 | 3.65 | ,, | 0.30 | ,, | ,, | 113.0 | 99.5 | 86.5 |
| 7 | 3.60 | ,, | 0.35 | ,, | ,, | 111.0 | 99.0 | 86.0 |
| 8 | 3.55 | ,, | 0.40 | ,, | ,, | 108.5 | 98.0 | 84.5 |
| 9 | 3.50 | ,, | 0.45 | ,, | ,, | 106.5 | 96.0 | 83.5 |
| 10 | 3.45 | ,, | 0.50 | ,, | ,, | 104.5 | 94.5 | 82.5 |
| 11 | 4.00 | 0.75 | 0.20 | ,, | ,, | 106.5 | 96.0 | 86.0 |
| 12 | 3.75 | 1.0 | ,, | ,, | ,, | 115.0 | 98.5 | 87.5 |
| 13 | 3.50 | 1.25 | ,, | ,, | ,, | 113.0 | 97.5 | 88.0 |
| 14 | 3.25 | 1.5 | ,, | ,, | ,, | 103.5 | 97.0 | 87.5 |
| 15 | 3.77 | 1.0 | ,, | ,, | 0.03 | 105.0 | 99.0 | 85.5 |
| 16 | 3.75 | ,, | ,, | ,, | 0.05 | 115.0 | 99.0 | 88.0 |
| 17 | 3.73 | ,, | ,, | ,, | 0.07 | 123.0 | 98.5 | 89.0 |
| 18 | 3.70 | ,, | ,, | ,, | 0.10 | 128.0 | 97.5 | 90.5 |
| 19 | 3.65 | ,, | ,, | ,, | 0.15 | 124.0 | 95.0 | 91.0 |
| 20 | 3.60 | ,, | ,, | ,, | 0.20 | 115.0 | 93.0 | 92.5 |
| 21 | 3.95 | 1.0 | – | 1.0 | 0.05 | 100.0 | 90.0 | 82.0 |

It is evident from the foregoing results that the phosphor according to the invention exhibits a higher luminescence intensity when irradiated by 254 nm ultraviolet radiation, a smaller decrease in luminescence intensity upon baking or by irradiation of 185 nm ultraviolet radiation, as compared with a prior art halophosphate phosphor activated with divalent europium.

In respect of the following Examples 4 to 6, composition, chromaticity, peak wavelength and half width of phosphors employed in the fluorescent lamp of the invention are shown in Table 2. Spectral energy distribution of the phosphors is shown in Figure 5 (in which symbols correspond to those in Table 2).

Example 4

In the fluorescent lamp shown in Figure 8, the phosphors of the symbols A and D in Table 2 infra were admixed in a portion so that color temperature of 4200 K with deviation ±0 uv was attained. The mixture 41 was coated inside of the glass tube 42 having the diameter of 32 mm as shown in Figure 8. A 40 W fluorescent lamp having the discharge electrodes 43 and 44 was produced, of which the colorimetric and photometric measurements were performed. The results are summarized in Table 3.

The fluorescent lamp according to the invention showed the initial luminous flux of 2600 ~ 2850 lumen. It was confirmed that luminous flux decreased only very slightly during lamp operation.

TABLE 2

| Symbol | Phosphor | Chromaticity coordinate (FL 40S) x | Chromaticity coordinate (FL 40S) y | Emission peak wavelength (nm) | Half width (nm) |
|---|---|---|---|---|---|
| A | $Ba_{3.6}Ca_{1.0}Mg_{0.3}Cl(PO_4)_3$:Eu(0.1) | 0.203 | 0.350 | 495 | 90 |
| B | $Ba_{3.9}Ca_{0.8}Mg_{0.3}Cl(PO_4)_3$:Eu(0.1) | 0.200 | 0.327 | 488 | 90 |
| C | $Ba_{4.2}Ca_{0.5}Mg_{0.3}Cl(PO_4)_3$:Eu(0.1) | 0.197 | 0.308 | 482 | 90 |
| D | $(Sr, Mg)_3(PO_4)_2$:Sn | 0.479 | 0.390 | 630 | 138 |

TABLE 3

| | Phosphor (Weight percent) | | Total luminous flux (100 hour value) (Lm) | Color tem-perature (K) | De-viation (uv) | Average color rendering index (Ra) | Special color rendering index | | | | | | |
|---|---|---|---|---|---|---|---|---|---|---|---|---|---|
| | $(Ba,Ca,Mg)_5Cl(PO_4)_3$:Eu | $(Sr,Mg)_3(PO_4)_2$:Sn | | | | | $R_9$ | $R_{10}$ | $R_{11}$ | $R_{12}$ | $R_{13}$ | $R_{14}$ | $R_{15}$ |
| Example 4 | 40 | 60 | 2450 | 4200 | 0 | 97 | 90 | 92 | 97 | 94 | 98 | 96 | 97 |
| 5 | 48 | 52 | 2400 | 5000 | 0 | 99 | 97 | 98 | 98 | 98 | 99 | 98 | 99 |
| 6 | 51 | 49 | 2420 | 5600 | 0 | 99 | 96 | 96 | 99 | 92 | 98 | 98 | 98 |
| Prior art | Mixture of 1) $MgWO_4$, 2) $(Sr,Mg)_3(PO_4)_2$:Sn, and 3) $3.5MgO.0.5MgF_2.GeO_2$:Mn | | 2000 | 5000 | 0 | 98 | 90 | 95 | 98 | 95 | 98 | 98 | 97 |

Example 5

The phosphors of the symbols B and D shown in Table 2 above were admixed in a ratio so that color temperature of 5000 K with deviation ±0 uv was obtained. A fluorescent lamp was produced with the mixing following the same procedures as in Example 4, of which the colorimetric and photometric measurements were performed. The results are summarized also in Table 3.

Example 6

The phosphors of the symbols C and D shown in Table 2 were admixed in a proportion so that color temperature of 5600 K with deviation ±0 uv was obtained. A fluorescent lamp was produced with the mixture following the same procedures as in Example 4, of which the colorimetric and photometric measurements were performed. The results are also summarized in Table 3.

Chromaticity coordinates and spectral energy distributions of the lamps obtained in Examples 4—6 are indicated in Figures 6 and 7, respectively (The numbers in the Figures correspond to those of Examples, respectively).

It will be evident from the foregoing Examples that, in the fluorescent lamp according to the invention, the average color rendering index (Ra) can be made more than 95 and that the total luminous flux (lm) is improved by about 20%, within color temperature range of 4000 ~ 5000 K, without any double layer coating or pigment layer used in prior art fluorescent lamps, by employing as a blue-green phosphor an alkaline earth metal halophosphate phosphor activated with divalent europium, and a strontium-magnesium orthophosphate phosphor activated with tin, and by selecting the peak wavelength of the former phosphor and also by changing the mixing proportion of the former and the latter phosphors properly.

According to the invention, production efficiency of fluorescent lamps is remarkably improved and variations of emitted color and of color rendering index are decreased to enable an easy quality control, by virtue of unnecessity of double layer coating or pigment layer coating process.

**Claims**

1. A blue-green emitting halophosphate phosphor activated with divalent europium, which is represented by the general formula:

$$M_{5-x}X(PO_4)_3:Eu^{2+}{}_{(x)}$$

wherein M consists of barium (Ba), calcium (Ca) and magnesium (Mg); X is one or more of fluorine (F), chlorine (Cl) or bromine (Br); and x is a positive value of less than 5.

2. The phosphor according to Claim 1, wherein said M consists of 3 to 4.5 gram-atom of Ba, 0.5 to 2 gram-atom of Ca and 0.01 to 1 gram-atom of Mg, and x is more than 0.01 and not more than 0.2.

3. The phosphor according to Claim 2, wherein said Mg is contained in the amount of 0.1 to 0.5 gram-atom.

4. The phosphor according to Claim 3, wherein said Mg is contained in the amount of 0.15 to 0.3 gram-atom.

5. The phosphor according to Claim 1, wherein said X is Cl.

6. A fluorescent lamp which comprises a mixture of a phosphor (i) which is the phosphor as claimed in Claim 1 having the emission peak at the wavelength region of 480 to 500 nm, and a phosphor (ii) having the emission peak at the wavelength region of 620 to 640 nm and the half-width of 120 to 160 nm, said mixture being coated inside of a glass tube.

7. The fluorescent lamp according to Claim 6, wherein said phosphor (i) is represented by the general formula:

$$M_{5-x}X(PO_4)_3:Eu^{2+}{}_{(x)}$$

wherein M consists of Ba, Ca and Mg, containing 3 to 4.5 gram-atom of Ba, 0.5 to 2 gram-atom of Ca and 0.01 to 1 gram-atom of Mg each; X is one or more of F, Cl or Br; and $0.01 < x \leqq 0.2$.

8. The fluorescent lamp according to Claim 7, wherein said Mg is contained in the amount of 0.1 to 0.5 gram-atom.

9. The fluorescent lamp according to Claim 8, wherein said Mg is contained in the amount of 0.15 to 0.3 gram-atom.

10. The fluorescent lamp according to Claim 6, wherein said X is Cl.

11. The fluorescent lamp according to Claim 6, wherein said phosphor (ii) is strontium-magnesium orthophosphate phosphor activated with tin.

**Revendications**

1. Substance fluorescente aux halogénophosphates émettant dans la bleu-vert, activée par de l'europium bivalent, qui est représentée par la formule générale

$$M_{5-x}X(PO_4)_3 : Eu^{2+}{}_{(x)}$$

dans laquelle M consiste en baryum (Ba), calcium (Ca) et magnésium (Mg); X est un ou plusieurs des halogènes fluor (F), chlore (Cl) ou brome (Br); et x est un nombre positif inférieur à 5.

2. Substance fluorescente selon la revendication 1, dans laquelle ledit M consiste en 3 à 4,5 atomes-grammes de Ba, 0,5 à 2 atomes-grammes de Ca et 0,01 à 1 atome-gramme de Mg, et x est supérieur à 0,01 et non-supérieur à 0,2.

3. Substance fluorescente selon la revendication 2, dans laquelle ledit Mg est contenu en une quantité de 0,1 à 0,5 atome-gramme.

4. Substance fluorescente selon la revendication 3, dans laquelle ledit Mg est contenu en une quantité de 0,15 à 0,3 atome-gramme.

5. Substance fluorescente selon la revendication 1, dans laquelle ledit X est Cl.

6. Lampe fluorescente, qui comprend un mélange d'une substance fluorescente (i) qui est la substance fluorescente telle que revendiquée par la revendication 1, ayant un pic d'émission dans la zone de longueurs d'onde de 480 à 500 nm, et d'une substance fluorescente (ii) ayant son pic d'émission dans la zone de longueurs d'onde de 620 à 640 nm, avec une demi-largeur de 120 à 160 nm, ce mélange étant appliqué sur l'intérieur d'un tube de verre.

7. Lampe fluorescente selon la revendication 6, dans laquelle ladite substance fluorescente (i) est représentée par la formule générale

$$M_{5-x}X(PO_4)_3 : Eu^{2+}{}_{(x)}$$

dans laquelle M consiste en Ba, Ca et Mg, contenant respectivement 3 à 4,5 atomes-grammes de Ba, 0,5 à 2 atomes-grammes de Ca et 0,01 à 1 atome-gramme de Mg; X est un ou plusieurs des halogènes F, Cl ou Br; et $0,01 < x \leqq 0,2$.

8. Lampe fluorescente selon la revendication 7, dans laquelle ledit Mg est contenu en une quantité 0,1 à 0,5 atome-gramme.

9. Lampe fluorescente selon la revendication 8, dans laquelle ledit Mg est contenu en une quantité de 0,15 à 0,3 atome-gramme.

10. Lampe fluorescente selon la revendication 6, dans laquelle ledit X est Cl.

11. Lampe fluorescente selon la revendication 6, dans laquelle ladite substance fluorescente (ii) est une substance fluorescente à l'orthophosphate de strontium-magnésium activé à l'étain.

**Patentansprüche**

1. Blaugrün emittierender Halogenphosphatphosphor, aktiviert mit zweiwertigem Europium, entsprechend der allgemeinen Formel:

$$M_{5-x}X(PO_4)_3 : Eu^{2+}{}_{(x)}$$

worin M Barium (Ba), Calcium (Ca) und Magnesium (Mg) bedeutet; X einen oder mehrere Fluor- (F), Chlor- (Cl) oder Bromatome (Br) darstellt; und x einen positiven Wert von weniger als 5 bedeutet.

2. Phosphor nach Anspruch 1, dadurch gekennzeichnet, daß M 3 bis 4,5 Grammatom Ba, 0,5 bis 2 Grammatom Ca und 0,01 bis 1 Grammatom Mg darstellt, und x mehr als 0,01 und nicht mehr als 0,2 bedeutet.

3. Phosphor nach Anspruch 2, dadurch gekennzeichnet, daß Mg in einer Menge von 0,1 bis 0,5 Grammatom enthalten ist.

4. Phosphor nach Anspruch 3, dadurch gekennzeichnet, daß Mg in einer Menge von 0,15 bis 0,3 Grammatom enthalten ist.

5. Phosphor nach Anspruch 1, dadurch gekennzeichnet, daß X Cl bedeutet.

6. Fluoreszierende Lampe, bestehend aus einem Gemisch eines Phosphors (i) entsprechend dem im Anspruch 1 beanspruchten Phosphor, mit einem Emissionspeak im Wellenlängenbereich von 480 bis 500 nm, und einem Phosphor (ii) mit einem Emissionspeak im Wellenlängenbereich von 620 bis 640 nm und einer Halbwertsbreite von 120 bis 160 nm, wobei das genannte Gemisch auf der Innenseite eines Glasrohres aufgetragen wird.

7. Fluoreszierende Lampe nach Anspruch 6, dadurch gekennzeichnet, daß der genannte Phosphor (i) der folgenden allgemeinen Formel entspricht:

$$M_{5-x}X(PO_4)_3 : Eu^{2+}{}_{(x)}$$

worin M Ba, Ca und Mg darstellt, wobei 3 bis 4,5 Gramm-atom Ba, 0,5 bis 2 Grammatom Ca und 0,01 bis 1 Gramm-atom Mg enthalten sind; X ein oder mehrere F-, Cl- oder Br-Atome bedeutet; und $0,01 < x \leqq 0,2$.

8. Fluoreszierende Lampe nach Anspruch 7, dadurch gekennzeichnet, daß Mg in einer Menge von 0,1 bis 0,5 Grammatom enthalten ist.

9. Fluoreszierende Lampe nach Anspruch 8, dadurch gekennzeichnet, daß Mg in einer Menge von 0,15 bis 0,3 Grammatom enthalten ist.

10. Fluoreszierende Lampe nach Anspruch 6, dadurch gekennzeichnet, daß X Cl bedeutet.

11. Fluoreszierende Lampe nach Anspruch 6, dadurch gekennzeichnet, daß der genannte Phosphor (ii) ein mit Zinn aktivierter Strontium-Magnesium-Orthophosphat-Phosphor ist.

FIG.1

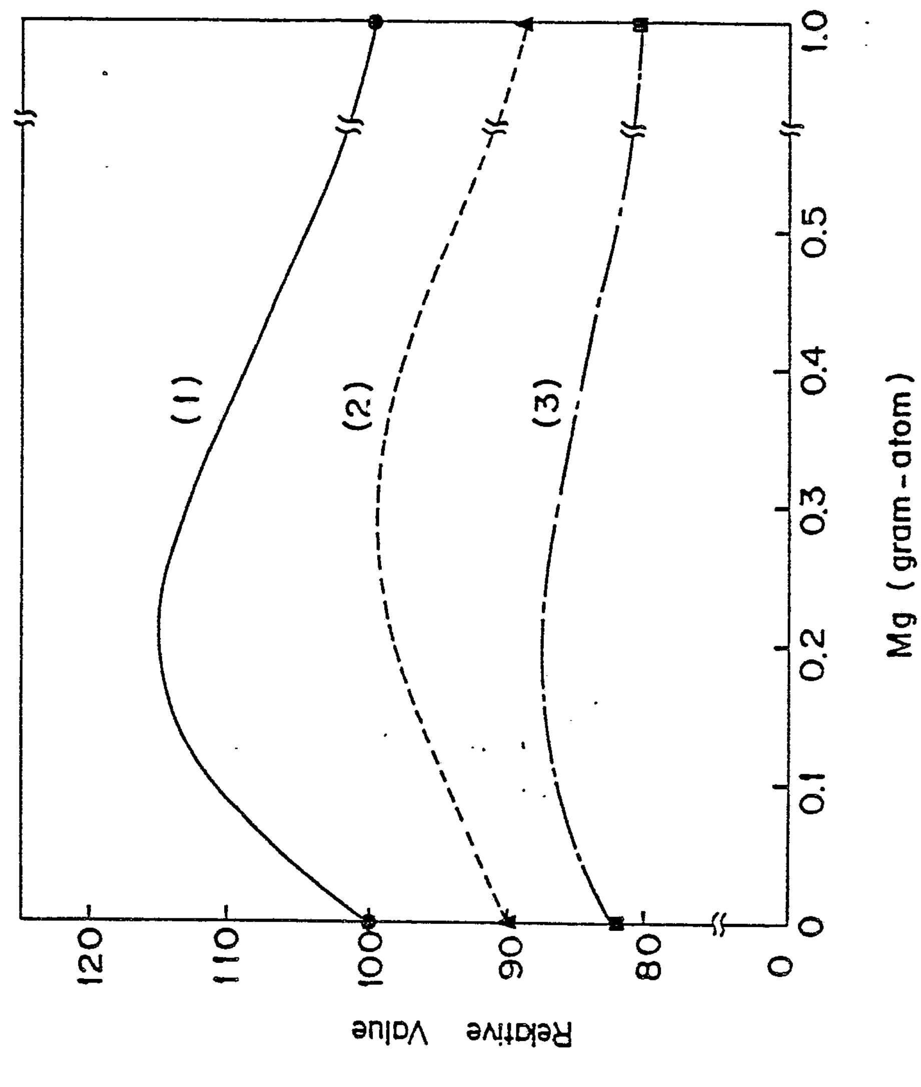
(1)
(2)
(3)
Relative Value
120
110
100
90
80
0
0
0.1
0.2
0.3
0.4
0.5
1.0
Mg (gram-atom)

FIG.2

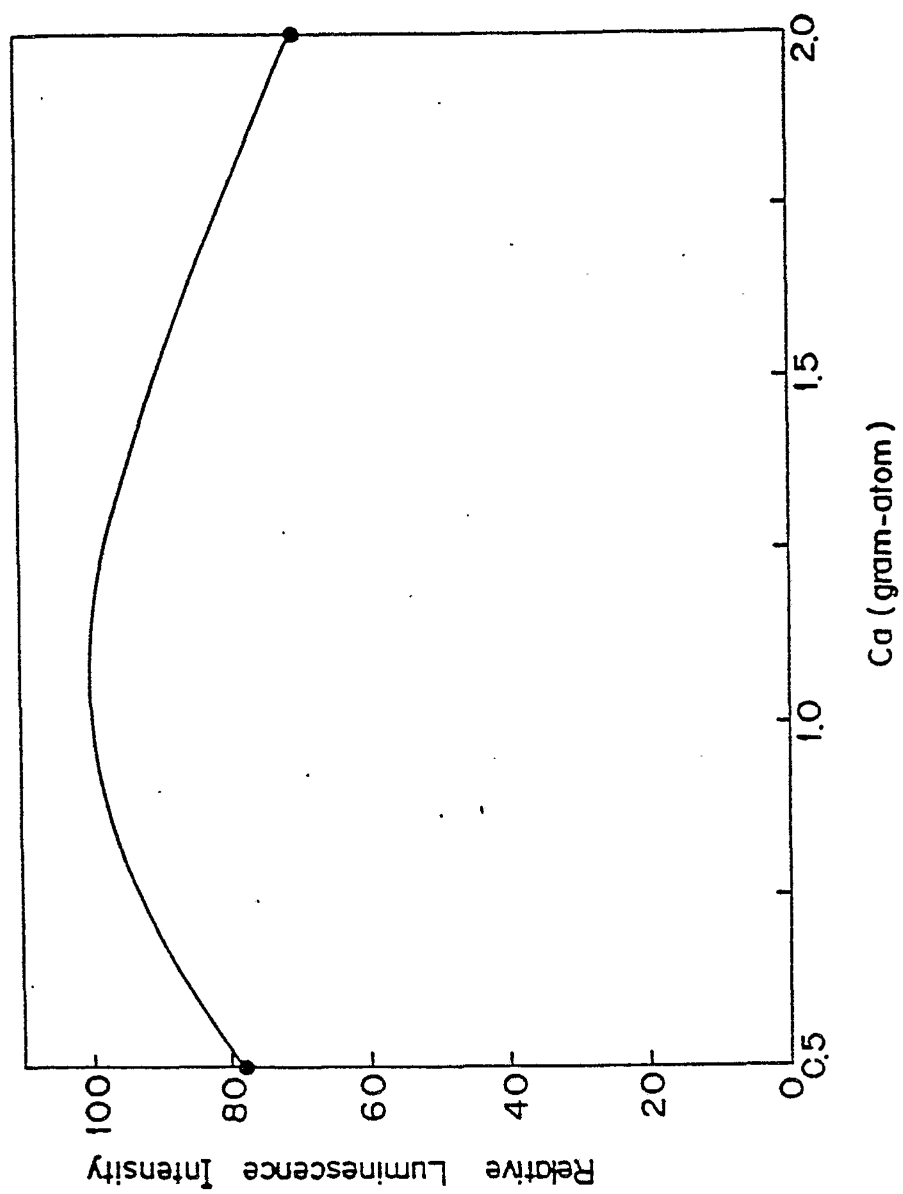

Relative Luminescence Intensity
0
20
40
60
80
100
0.5
1.0
1.5
2.0
Ca (gram-atom)

FIG.3

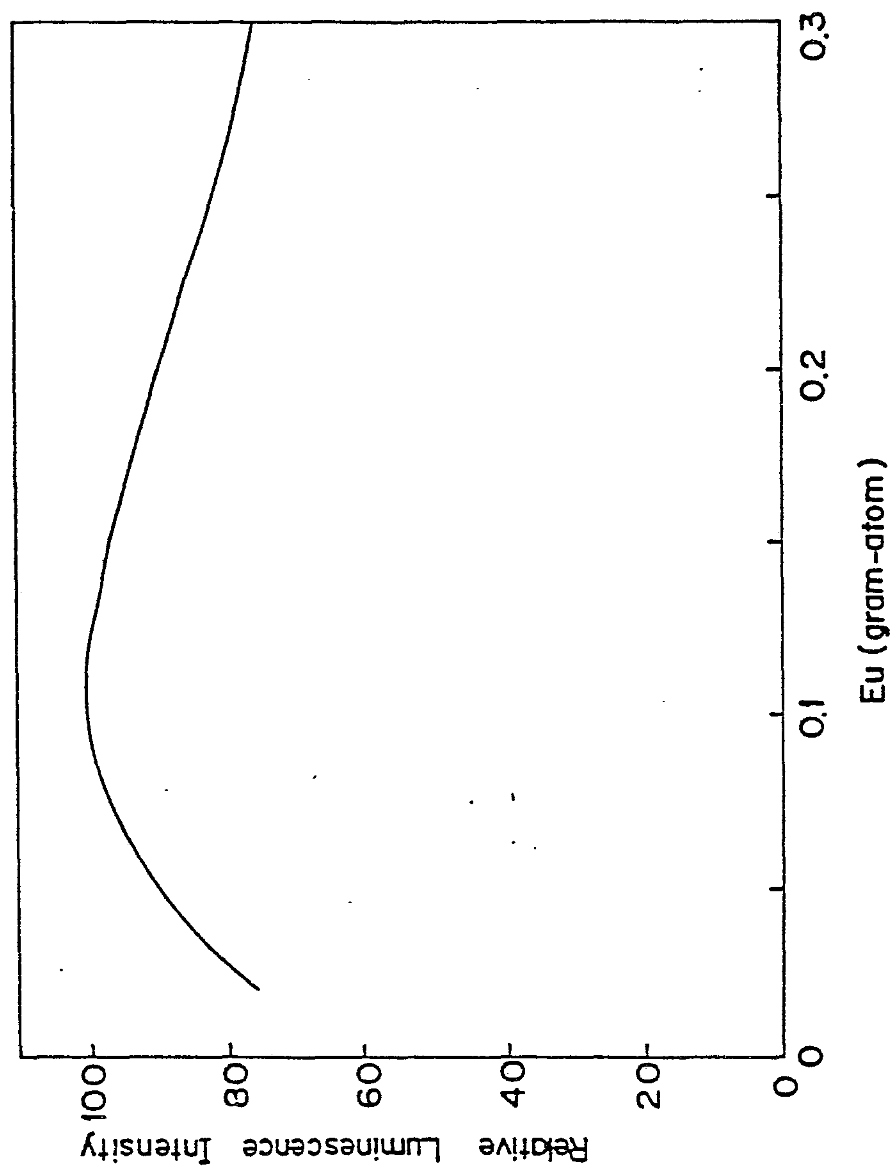
Relative Luminescence Intensity
100
80
60
40
20
0
0.1
0.2
0.3
Eu (gram-atom)

FIG.4

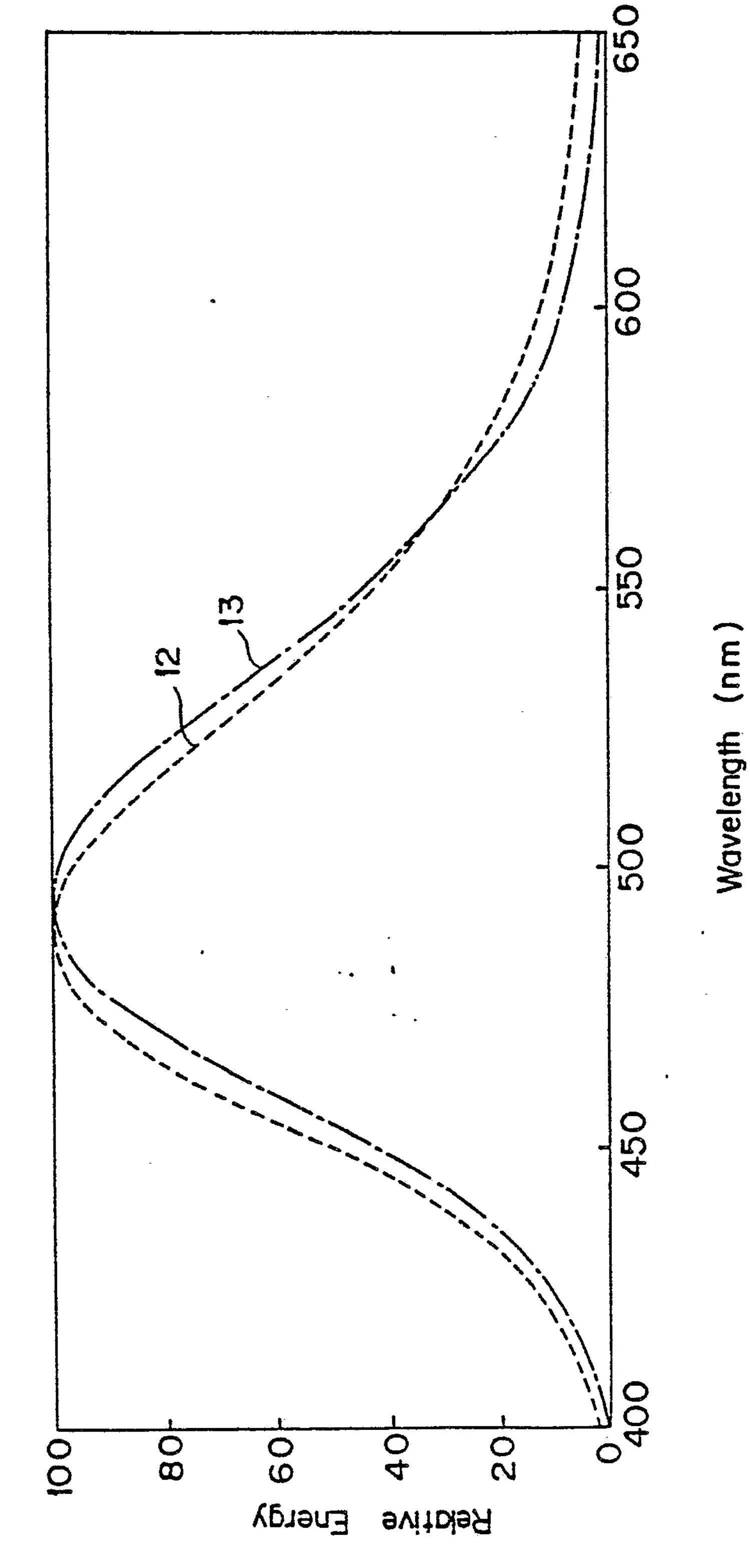
100
80
60
40
20
0
Relative Energy
400
450
500
550
600
650
Wavelength (nm)
12
13

FIG.5

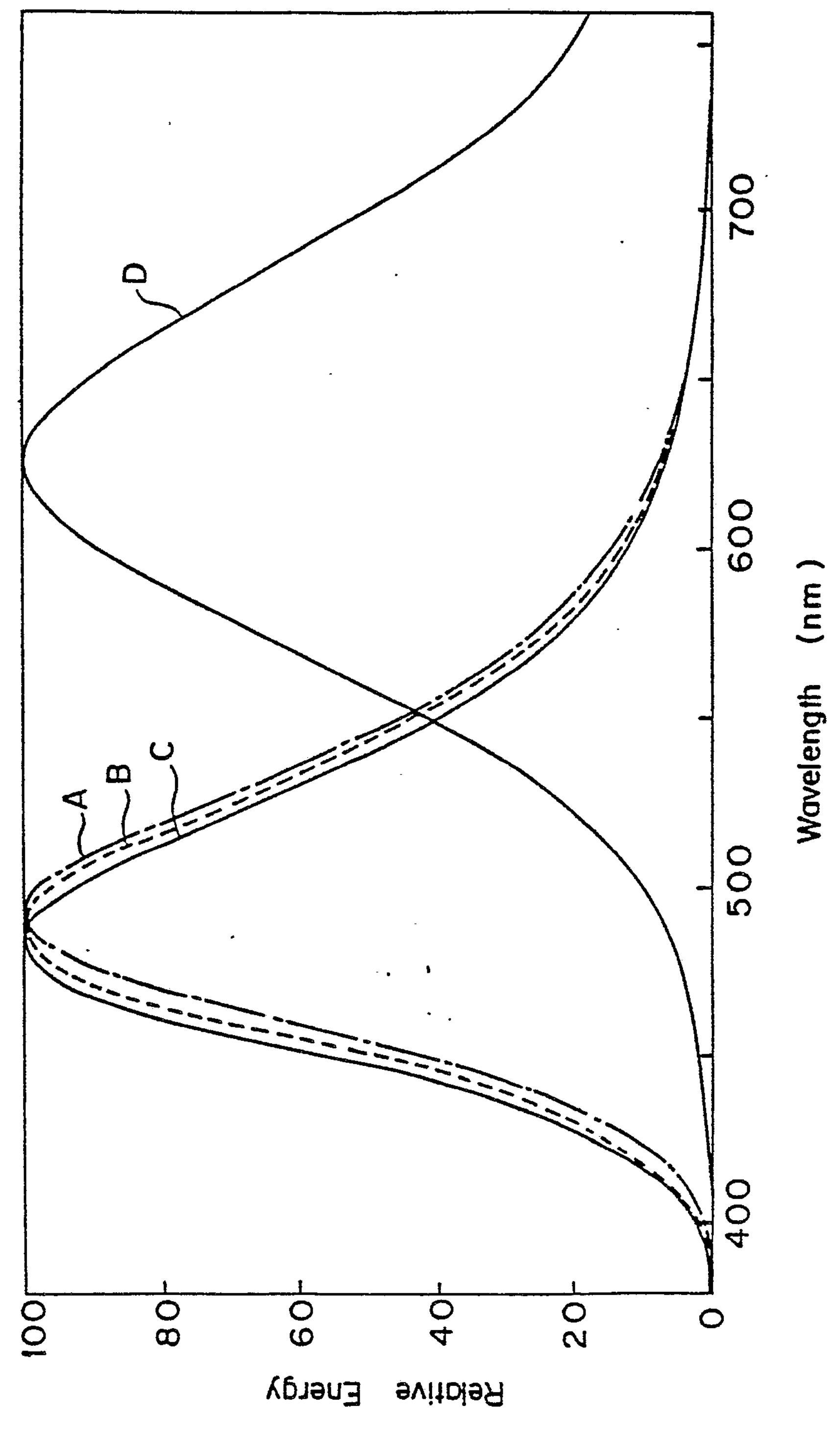
Relative Energy
100
80
60
40
20
0
400
500
600
700
Wavelength (nm)
A
B
C
D

FIG.6

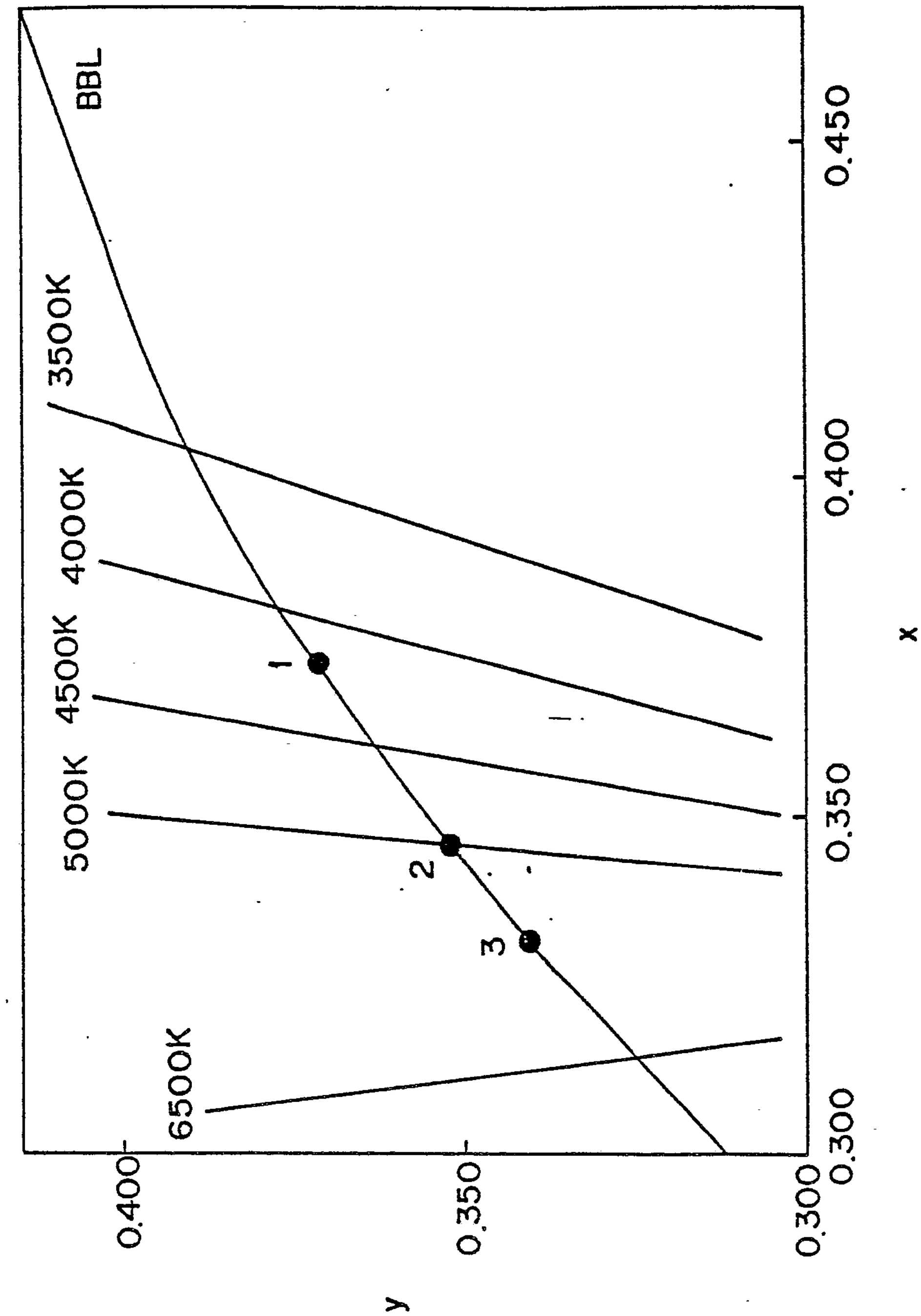

FIG.7

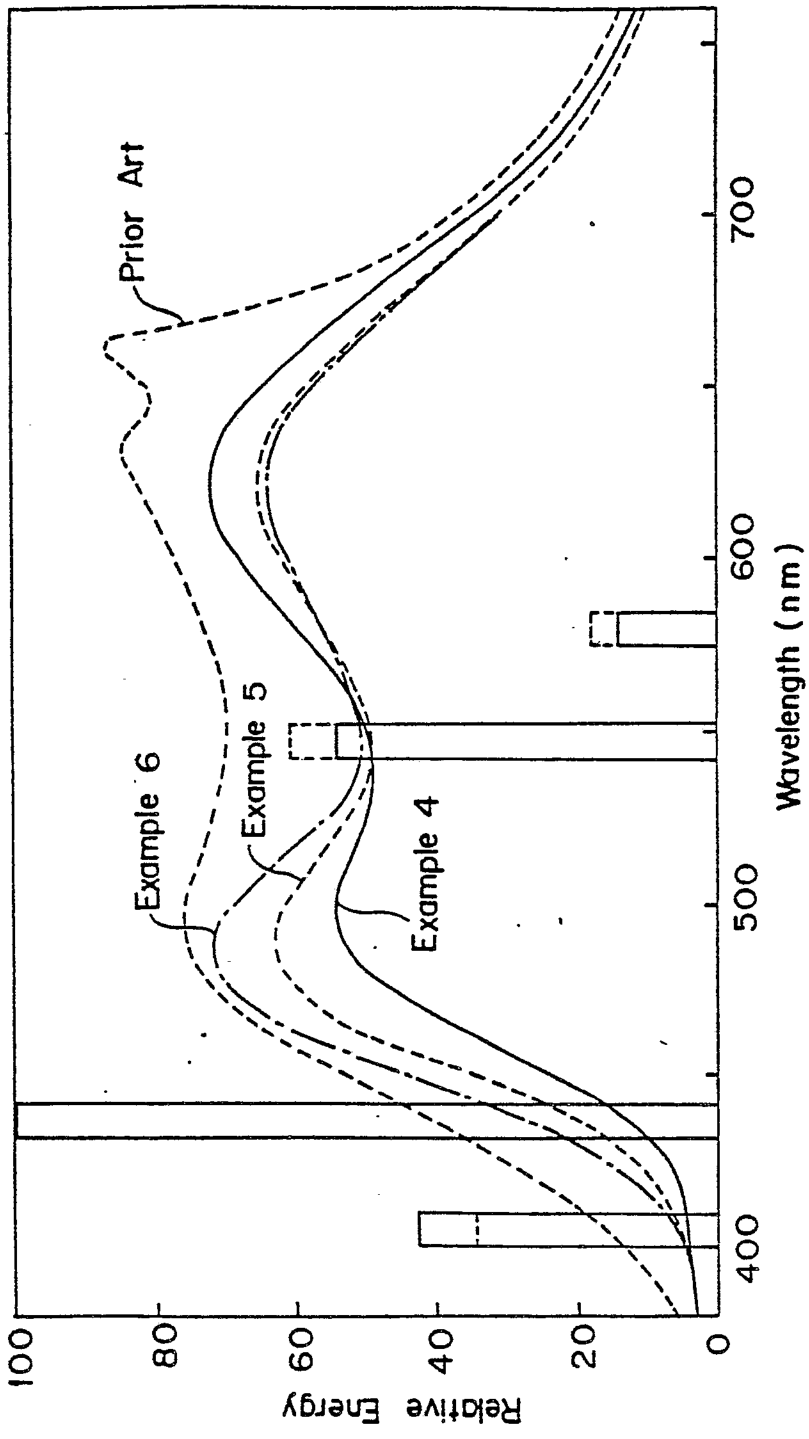
Prior Art
Example 6
Example 5
Example 4
100
80
60
40
20
0
Relative Energy
400
500
600
700
Wavelength (nm)

FIG.8

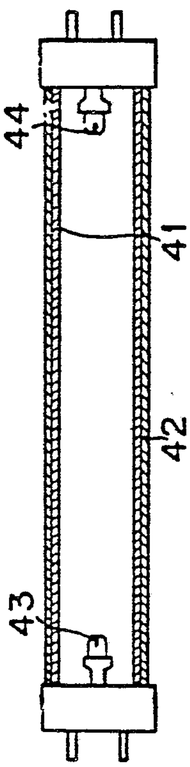
44
43
41
42